# EUROPÄISCHE PATENTSCHRIFT

(11) **EP 3 718 756 B1**
(45) Veröffentlichungstag und Bekanntmachung des Hinweises auf die Patenterteilung: **21.02.2024**
(21) Anmeldenummer: 20165560.2
(22) Anmeldetag: 25.03.2020
(51) Int. Cl.: B30B 9/14, B30B 9/26, C02F 11/125, C05F 3/06, C10L 5/36, C10L 5/42, C05F 17/10, C05F 17/40, C05F 17/50, C05F 17/921

(54) **VERFAHREN FÜR DIE BEHANDLUNG VON GÜLLE, MIST UND GÄRRESTEN**
PROCESS FOR THE TREATMENT OF LIQUID MANURE, SOLID MANURE AND DIGESTATES
PROCÉDÉ DE TRAITEMENT DU LISIER, DU FUMIER ET DES DIGESTATS

(30) Priorität: 28.03.2019 DE 102019108098
(43) Veröffentlichungstag der Anmeldung: 07.10.2020
(73) Patentinhaber: DS Refining B.V., 7622 EZ Borne (NL)
(72) Erfinder: Kiomall, Daniel, 44137 Dortmund (DE); Borre, Fokko Hermann Jan, 7497MT Bentelo (NL)

(56) Entgegenhaltungen:
- EP-A1- 2 614 890
- EP-B1- 1 757 562
- WO-A1-2012/096574
- WO-A1-2014/094162
- DE-A1-102005 059 880
- DE-A1-102007 004 892
- DE-A1-102012 212 298

## Beschreibung

Die vorliegende Erfindung betrifft ein Verfahren gemäß dem Oberbegriff des Anspruchs 1.

Verfahren der eingangs genannten Art sind seit Langem bekannt und werden insbesondere im landwirtschaftlichen Bereich eingesetzt, wo die Auftrennung von Gülle oder Gärresten in eine feste und in eine flüssige Phase wünschenswert ist.

Ein Verfahren der eingangs genannten Art ist beispielsweise aus der DE 10 2005 059 880 A1 bekannt.

Aus der EP 1 757 562 A1 ist eine Gerätekombination aus einer Wendel-Filter-Presse und einem Zyklonfilter für eine Fest/Flüssig-Trennstufe offenbart.

Hierbei wird das partikelgebundene Phosphat erst im Zyklonfilter separiert. In der Wendel-Filter-Presse als weitere Trenneinrichtung ist es dagegen möglich, den gesamten Feststoff mit einer Partikelgröße von 20µm oder größer aus der Gärrestlösung zu entfernen.

Die DE 10 2014 104 544 A1 offenbart eine Vorrichtung zum Separieren fester und flüssiger Bestandteile einer Fest-Flüssig-Mischung mit einer Schwingfördereinrichtung, welche ein Schwingsieb aufweist und welche innerhalb eines im Wesentlichen geschlossenen Gehäuses angeordnet ist. Oberhalb des Schwingsiebs ist ein Zulauf angeordnet, der die Fest-Flüssig-Mischung in das Gehäuse und auf das Schwingsieb führt, wobei dem in Förderrichtung vorderen Ende des Schwingsiebs eine Austragsöffnung nachgeschaltet ist, welche die festen Bestandteile aus dem Gehäuse führt. Hierbei ist in der DE 10 2014 104 544 A1 eine Überlaufkante in Förderrichtung an dem Schwingsieb vorgesehen, sodass die festen Bestandteile sich auf dem Schwingsieb stauen und eine entsprechende Höhe bzw. Schichtdicke erreichen müssen, bevor sie die Überlaufkante überwinden und in die Austragsöffnung gelangen können.

Gülle besteht hauptsächlich aus Wasser mit darin gelösten Nährstoffen und organischer Substanz sowie einigen Mineralstoffen. Wie hoch die jeweiligen Anteile sind, hängt von verschieden Faktoren, wie beispielsweise der Tierart und der Fütterung ab. Wichtige Nährstoffe, die Gülle zu einem bedeutenden Dünger machen, sind beispielsweise Stickstoff (N), Phosphat (P₂O₅), Kalium (K₂O) sowie Magnesium (MgO). Je nach Beigabe von Einstreu, d.h. als Lager für das Vieh in den Stall eingestreutes Stroh o. Ä, mit tierischen Ausscheidungen und Wasser unterscheidet man auch zwischen Dick- oder Dünngülle, Schwemmmist oder Flüssigmist.

Gärrest fällt bei der Produktion von Biogas neben dem Hauptprodukt Methan an.

Dieser wird auf landwirtschaftlichen Flächen zur Nährstoffversorgung der Kulturen ähnlich des Düngers Gülle ausgebracht. Wichtige Nährstoffe sind auch hier beispielsweise Phosphat (P₂O₅) und Kalium (K₂O).

Aus mehreren Gründen kann die Auftrennung der Gülle oder des Gärrestes in eine feste und eine flüssige Phase angezeigt sein. Beispielsweise sind Feststoffe problemlos lagerfähig, stabilisiert und können als Bodenverbesserer im Streuverfahren ausgebracht oder als Einstreu verwendet werden. Im Vordergrund bleibt dabei, dass Gülle oder Gärrest für den Einsatz auf eigenen Flächen oder für den Transport aus Überschussgebieten möglichst nährstoffreich sein sollte.

Um den Wassergehalt zu reduzieren, stehen insbesondere Flüssigkeits-Feststoff-Separatoren zur Verfügung. Hierzu zählen insbesondere Pressschnecken oder Dekanterzentrifugen, die auf mechanischen Prozessen basieren. In der WO 2012/096574 A1, die ein Verfahren gemäß dem Oberbegriff des Anspruchs 1 offenbart, ist beispielsweise offenbart, dass ca. 92% der Mineralien während einer Separation von dem Feststoff getrennt und in der flüssigen Phase verbleiben.

Pressschneckenseparatoren entwässern das Ausgangsmaterial, d.h. beispielsweise die Gülle, indem ein Schneckenförderer das Material zu einem Siebmantel hin transportiert und dabei auspresst. Das Sieb mit einer Maschenweite beispielsweise von 0,1-1 mm hält die Feststoffe, die hauptsächlich aus Fasermaterial bestehen, aus der ausgepressten Flüssigkeit zurück. Mit einem Pressschneckenseparator ist es im Stand der Technik möglich, die Feststoffe aus einem Ausgangsmaterial mit 4-15 % Trockensubstanzgehalt auf 18-35 % Trockensubstanzgehalt aufzukonzentrieren. Als Trockensubstanz (TS) bezeichnet man dabei die Bestandteile, welche nach vollständigem Wasserentzug verbleiben. Die Trockensubstanz ist somit das Gegenstück zum Wassergehalt eines Stoffes.

Eine Anlage der eingangs genannten Art besteht dabei häufig aus einem derartigen Separator, einem Podest und der Prozesssteuerung. Weiterhin kann einer Anlage der eingangs genannten Art auch ein Gärrest- bzw. Güllebehälter zugeordnet sein.

Ein Flüssigkeits-Feststoff-Separator für die Behandlung von Gülle, der in Gestalt eines Pressschneckenseparators vorliegt, offenbart beispielsweise die EP 0 436 164 A1.

Die intensive Landwirtschaft weltweit, bei welcher oftmals mehr gedüngt wird, als die angebauten Pflanzen benötigen, führt jedoch vielerorts zu einer Anreicherung von Nährstoffen im Boden und infolgedessen zu einer Verunreinigung des Grundwassers mit Phosphaten und Nitraten. Um diesem Problem zu begegnen, werden vermehrt gesetzliche Vorgaben zur Reduktion der Düngung gemacht, um die mancherorts signifikanten Mengen an Gülle oder Gärrest; welche nicht auf Feldern ausgebracht werden dürfen, zu verringern. Diese Mengen werden häufig unter hohem finanziellen Aufwand und Kohlendioxidemissionen Hunderte von Kilometern transportiert, damit diese auf verfügbaren Flächen mit entsprechendem Nährstoffbedarf eingesetzt werden können. Ein anderer Ansatz ist die Verbrennung der separierten Feststoffe, die jedoch klima- und gesundheitsschädlich ist.

Aufgabe der Erfindung ist daher, ein Verfahren der eingangs genannten Art derart weiterzuentwickeln, dass eine bedarfsgerechte Erzeugung von separierten Feststoffen gewährleistet ist, wobei gleichzeitig sichergestellt ist, dass die aus der Separation gewonnenen Feststoffe zu wertschöpfenden Produkten weiterverarbeitet werden kann.

Diese Aufgabe wird durch ein Verfahren mit den Merkmalen des Anspruchs 1 gelöst. Weitere Vorteile, Merkmale und Details der Erfindung ergeben sich aus den Unteransprüchen, der Beschreibung und den Zeichnungen.

Die Erfindung sieht zunächst vor, dass die Trenneinrichtung auch zur Trennung eines Feststoffes in Form von Partikeln von einem anderen Feststoff (z.B. Fasern) eingestellt ist. Hierbei ist es möglich, dass es sich um eine einzige Trenneinrichtung handelt. Denkbar ist aber auch, dass die Trenneinrichtung in Gestalt von zwei Trenneinrichtungen vorliegt, wobei eine Trenneinrichtung zur Trennung eines Feststoffes in Form von Partikeln von einem vorher schon abgetrennten Feststoff eingestellt ist. Während der Separation werden auch Mineralien von dem Fasermaterial separiert, wobei mehr als 85% der Mineralien von dem Fasermaterial separiert werden. Um TA-Luft-konforme Brennmaterialien aus dem abgeschiedenen nicht in der flüssigen Phase verbliebenen Feststoff zu gewinnen, sieht die Erfindung also vor, dass mehr als 85% der Mineralien (hierzu zählen auch die Nährstoffe) , bevorzugt mehr als 90% der Mineralien, von dem Fasermaterial separierbar sind, d.h. in der flüssigen Phase verbleiben. Zu den Mineralien zählen bevorzugt auch beispielsweise N, P, K, Ca, Mg, S und Ionen wie Na+ und Cl-. Bei dem Fasermaterial handelt es sich also im Sinne der Erfindung um den anderen Feststoff.

Kernidee der Erfindung ist es, außer Wasser auch Feststoffanteile, die im Überschuss vorliegen und reduziert werden müssen, von dem während der Separation erzeugten entwässerten Feststoff abzutrennen. Entgegen dem Stand der Technik und gemäß der Erfindung wird also nicht möglichst viel Feststoff in die feste Phase während der Separation befördert. Vielmehr verbleibt ein Teil des Feststoffs, der die Mineralien trägt, in der flüssigen Phase und zwar als Folge, dass ein Teil der Feststoffe von den übrigen Feststoffen getrennt wurde. Im Sinne der Erfindung zählen zu den Mineralien auch die Nährstoffe. Ein Teil der Feststoffe wird also gemäß der Erfindung von den anderen Feststoffen separiert. Im Sinne der Erfindung kann der Feststoff, der von dem anderen Feststoff separiert wird, vor der Separation in der flüssigen Phase oder an dem bzw. in dem anderen Feststoff sein. Als leistungsfähiges Instrumentarium für einen Flüssigkeits-Feststoff-Separator als auch für einen Feststoff-Feststoff-Separator hat sich vorzugsweise der Pressschneckenoperator erwiesen. In der Praxis hat es sich gezeigt, dass bei Pressschneckenoperatoren, deren Trenneinrichtungen also Siebelemente sind, beispielsweise Feststoffe, welche die Mineralien, d.h. auch die Nährstoffe, tragen, bei geeigneter Ausgestaltung des Siebelements fast vollständig von den übrigen Feststoffen, d.h. den Fasermaterialien getrennt wurden.

Liegt der Flüssigkeits-Feststoff-Separator als Pressschneckenseparator vor, d.h. ist die Trenneinrichtung ein Siebelement, lässt sich dabei vorteilhafterweise die Einstellung über die individuelle Dimensionierung des Spalts des Siebelements bzw. über die Maschenweite des Siebelements realisieren. Möglich ist auch, die Einstellung zusätzlich oder alternativ über die Länge des Presskuchens, der in dem Pressschneckenoperator entsteht, zu realisieren und zwar dergestalt, dass im Falle einer kurzen Länge des Presskuchens im hinteren Bereich des Presskuchens die Flüssigkeit ungehindert ablaufen kann, sodass beispielsweise wenig kleine Partikel in den Feststoff gedrückt werden.

Der grundlegende Gedanke der Erfindung kann anhand der Separation von Mineralien, d.h. auch von Nährstoffen, die im Sinne der Erfindung zu den Mineralien zählen, bei der Gülleseparation verdeutlicht werden. Der Feststoff in der Gülle besteht hauptsächlich aus Fasermaterial (Zellulosefasern), Partikeln sowie Mineralien, welche teilweise gelöst und teilweise an die Partikel gebunden, vorliegen. Um sicherzugehen, dass die nährstofftragenden Partikel nicht mit dem Fasermaterial abgetrennt werden, d.h. weniger Mineralien (hierzu zählen im Sinne der Erfindung auch Nährstoffe) im Feststoff verbleiben, muss eine Dimensionierung des Spalts gewählt und somit eingestellt werden, dass diese nährstofftragenden Partikel durch das Siebelement fließen lässt, also nicht von diesem aufgehalten werden. Andererseits befinden sich in der Gülle auch kleine Fasern. Diese können bei der Wahl eines groben Siebes von diesem ebenfalls nicht zurückgehalten werden und stellen daher einen Verlust an Fasermaterial dar.

Hier gibt es zwei mögliche Einstellungen der Trenneinrichtung:
1. Man wählt ein grobes Siebelement, um sicherzugehen, dass alle nährstofftragenden Partikel das Sieb passieren können. Man trennt also nur die groben Faserstoffe ab. Dann erhält man ein qualitativ sehr gutes - da nährstoffarmes - Fasermaterial.
2. Hat man eine Flüssigkeit mit wenig nährstofftragenden Feinpartikeln, kann man ein feineres Sieb verwenden, um einen höheren Anteil der feineren Fasern in die Feststoffphase der ersten Separation zu überführen.

Um die Beschaffenheit des Siebelements festzulegen, d.h. insbesondere die Dimensionierung bzw. Einstellung der Spalte, wird vorzugsweise vorab die Zusammensetzung der Gülle, d.h. insbesondere die Menge und Größe des Fasermaterials und der nährstofftragenden Partikel mit herkömmlichen und dem Fachmann bekannten Methoden ermittelt, um dann auf die Dimensionierung bzw. Einstellung der Spalte zu schließen. Hierzu werden vorab insbesondere durch eine Laboranalyse beispielsweise die folgenden dem Fachmann bekannten Parameter der Produkte ermittelt:
- Trockensubstanz, organische Trockensubstanz
- N (auch NH4, NO3, N organisch), P, K, CaO, MgO, Cu, Zn und S
- Partikelgrößenverteilung

Für die Laboranalyse stehen herkömmliche Methoden zur Verfügung. Zusätzlich stehen für die kontinuierliche Messung auf der Anlage Instrumentarien wie NIRS-Technik für die Messung von N, P, K und Trockensubstanzgehalt, MID (Magnetisch Induktiver Durchflussmesser) für die Messung des Durchflusses, Waagen (zur Gewichtsbestimmung), Messung der Leitfähigkeit (zur Bestimmung des Gesamtionengehalt) und pH-Sonden zur Messung des pH-Wertes, zur Verfügung.

Hierbei dienen insbesondere die herkömmlichen und dem Fachmann bekannten Methoden, um den zu erzielenden Prozentgehalt zu ermitteln, d.h. es wird beispielsweise bevorzugt ein Stoffstromdiagramm erstellt und mit Hilfe des Trockensubstanzgehaltes und des Volumenstroms auf die Abscheiderate, d.h. Separationsrate geschlossen. Aufgrund der Abscheiderate (also wieviel des zu separierenden Produktes geht in die flüssige und wieviel in die feste Phase) können mit herkömmlichen und dem Fachmann bekannten die Absolutwerte der einzelnen Bestandteile in dem Ausgangsmaterial bestimmt werden.

Aufgrund der Abscheiderate (also wieviel des Ausgangsmaterials geht in die flüssige und wieviel in die feste Phase geht) können die Absolutwerte der einzelnen Mineralien in jeder Fraktion (also auch im Ausgangsstoff, d.h. beispielsweise der Gülle, sowie der festen und der flüssigen Separationsphase) bestimmt werden.

Weitere, die Erfindung verbessernde Maßnahmen, werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und nicht dazu gedacht sind, die Erfindung in irgendeiner Form einzuschränken.

Es zeigen in schematischer Darstellung:
- Fig. 1: in perspektivischer Ansicht eine Anlage gemäß der Erfindung und
- Fig. 2: in einem Blockdiagramm ein erfindungsgemäßes Verfahren.

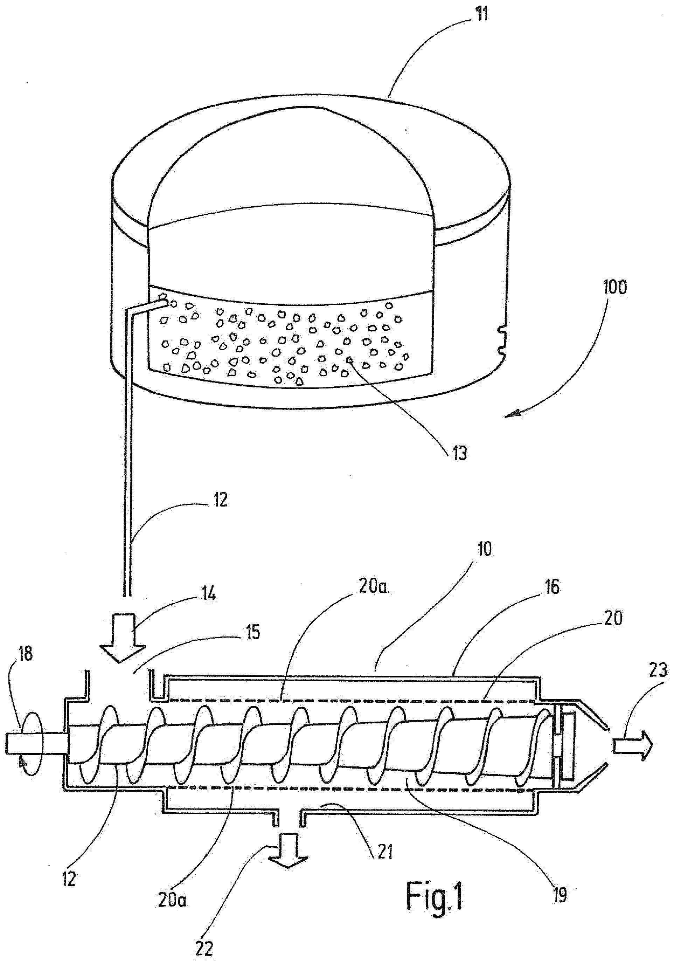

Figur 1 zeigt eine Anlage gemäß der Erfindung, die mit dem Bezugszeichen 100 versehen ist.

Die Anlage 100 weist einen Flüssigkeits-Feststoff-Separator 10 in Form eines Pressschneckenseparators und einen Güllebehälter 11 auf, der aus Beton oder Edelstahl gefertigt ist und mit einer in Figur 1 nicht gezeigten Leckageüberwachung und einem Rührwerk versehen ist.

Der als Rundbehälter ausgebildete Güllebehälter 11 hat ein nicht näher definiertes-Fassungsvermögen und ist, wie aus Figur 1 ersichtlich, zum Teil mit Gülle 13 gefüllt, die über einen in Figur 1 nicht gezeigten Güllewagen in den Güllebehälter 11 gepumpt wird.

Der Güllebehälter 11 ist mit dem Flüssigkeits-Feststoff-Separator 10, der das Separatorgehäuse 16 umfasst, verbunden und zwar, wie Figur 1 weiter verdeutlicht, über die Rohrleitung 12

Die zu trennende Gülle gelangt dabei mittels der Güllepumpe 14 über die in den Zulauf 15 mündende Rohrleitung 12 in den ringförmigen Einlaufraum des Flüssigkeits-Feststoff-Separators 10.

Wie aus Figur 1 weiter hervorgeht, umfasst der Flüssigkeits-Feststoff-Separator 10 den Antriebsmotor 18, von dem die Pressschnecke 17 angetrieben wird. Ein der Aufnahmevermögen der Pressschnecke 17 entsprechender Anteil der Gülle 13 (vornehmlich Feststoff) wird als Pfropfen mittels der Schneckenwendeln dem Trennraum 19 zugeführt, sodass er auf dem Siebelement 20, also auf der Trenneinrichtung, liegt. Die Pressschnecke 17 transportiert den Pfropfen derart, dass der Pressdruck bis hin zum Ende der Schneckenwendel und mit dem Pressdruck die Entwässerung des in dem Pfropfen gesammelten Feststoffes zunimmt und das Wasser aus dem Pfropfen ausgepresst bzw. getrennt wird. Hierbei wird dieser Pfropfen nicht direkt am Anfang der Schneckenwendel gebildet, sodass die partikelhaltige Flüssigkeit drucklos durch das Sieb ablaufen kann und nur die Faserfeststoffe von dem Sieb aufgehalten werden. Unter der Wirkung des von der Pressschnecke 17 erzeugten Pressdruckes wird schließlich der Pfropfen aus der Ausstoßmündung 23 ausgeschoben. Das Siebelement 20 ist, wie Figur 1 weiter verdeutlicht, von einer Trennkammer 21 umgeben, der einen Trennraum bildet, in dem sich das im Siebelement 20 abgetrennte Wasser (bzw. die partikelreiche Flüssigkeit) zur Ableitung durch den Wasserauslauf (bzw. Flüssigkeitsablauf) 22 sammelt.

Das Siebelement 20 weist Spalte 20a auf, durch die das Wasser bzw. die partikelreiche Flüssigkeit abgesondert wird. Je nach Siebelement 20 sind die Spalte 20a unterschiedlich dimensioniert. In der in Figur 1 dargestellten Ausführungsform der Erfindung sind die Spalte so dimensioniert, dass einerseits das Wasser das Siebelement 20 passieren kann und andererseits auch nährstofftragende Partikel, die sich in dem Feststoff befinden, sodass sich in dem ausgepressten Feststoff hauptsächlich noch nährstoffarmes Fasermaterial befindet.

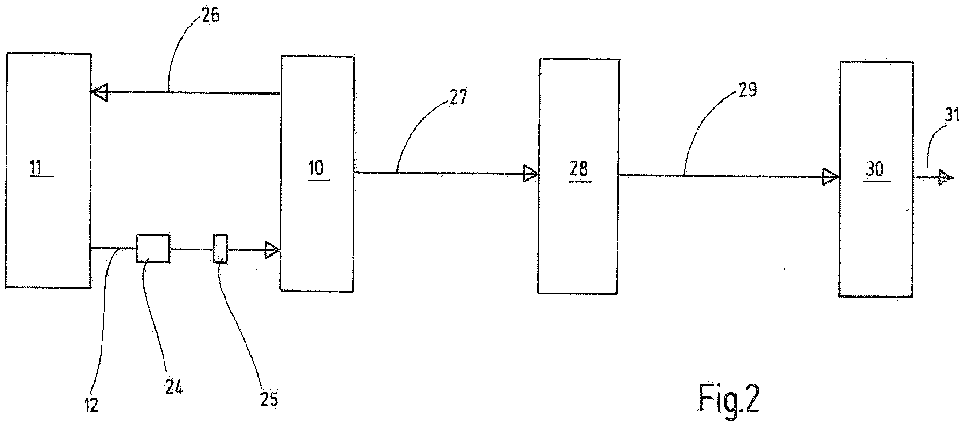

Figur 2 zeigt ein erfindungsgemäßes Verfahren, das damit beginnt, das Gülle aus dem Güllebehälter 11 über die Flüssigkeitszirkulationsleitung 12 mit einer Pumpe 24 in Form eines Drehkolbens oder einer Schneckenverdrängungspumpe zu einem Flüssigkeits-Feststoff-Separator 10 zur Fest/Flüssigtrennung gepumpt wird. Die Leitung 12 ist zudem mit dem Ventil 25 versehen, das als Sicherungseinrichtung Leckagen vorbeugt. Der Flüssigkeits-Feststoff-Separator 10 arbeitet so, dass mindestens 85% der in der Gülle enthaltenen Mineralien, d.h. auch der Nährstoffe in der flüssigen Phase verbleiben. Die flüssige Phase wird über die Flüssigkeitszirkulationsleitung 12 entweder zurück in den Güllebehälter 11 geführt oder alternativ einer weiteren Separation zugeführt, bei der Feinpartikel aus der flüssigen Phase abgetrennt werden.

Der im Flüssigkeits-Feststoff-Separators 10 abgetrennte Feststoff hat einen Trockensubstanzgehalt von mindestens 30% und wird in einem weiteren Verfahrensschritt über die Leitung 27 einer Trocknungseinrichtung 28 zugeführt. Die Leitung 27 ist ein Schneckenförderer und ist derart ausgebildet, dass Feststoffe mit Trockensubstanzgehalten von 30% transportieren werden können.

Zwischen dem Flüssigkeits-Feststoff-Separators 10 kann alternativ auch ein in Figur 2 nicht gezeigter Feststofflagerbehälter angeordnet sein, der als Puffer fungiert und die Trocknungseinrichtung 28 mit Feststoff auch versorgt, wenn der Flüssigkeits-Feststoff-Separator 10 vorübergehend nicht arbeitet.

Nach der Separation in dem Flüssigkeits-Feststoff-Separator 10 entsteht auf in dem separierten Feststoff eine stark krümelige Masse, wobei der Trockensubstanzgehalt vornehmlich zwischen 30 und 37% beträgt. Dieses krümelige Material wird in der Trocknungseinrichtung 28 mit ca. 200°C bis ca. 300°Cbeaufschlagt. Durch die plötzliche Erhitzung dehnt sich das in dem Feststoffanteil befindliche Zellwasser ähnlich wie bei einer Mikrowelle explosionsartig aus und sprengt die recht dünnen Zellwände des in der Gülle und Gärresten vorhandenen Fasermaterials. Damit steht auch die Zellflüssigkeit einer Verdampfung zur Verfügung und eine Kerntrocknung wird erreicht, d.h. die im Zellwasser gelösten, verdampfbaren Mineralien, d.h. auch Nährstoffe können entfernt werden. Hierbei wird auf einen Trockensubstanzgehalt von mindestens 85% getrocknet und so der Trockensubstanzgehalt weiter gesteigert. Zielwert für den separierten Feststoff ist ein Trockensubstanzgehalt von 90%, der beim nachfolgenden Pelletieren durch erneutes Verdampfen der übriggebliebenen Flüssigkeit erzielt wird und zu einer dauerhaften Lagerfähigkeit führt.

In der Trocknungseinrichtung 28 sind verschiedene Heizvarianten möglich. Entweder wird Luft mit Hilfe eines Brennkessels erhitzt und durch die Trocknungseinrichtung 28 gepustet oder Heißdampf wird im Kreis durch die Trocknungseinrichtung 28 gefahren und mit Hilfe von Wärmetauschern immer wieder auf die Ausgangstemperatur gebracht. Die Trocknungseinrichtung 28 besteht aus einer entweder drehenden Trommel oder einer feststehenden Trommel mit Zentralschnecke.

Nach der Trocknung gelangt der separierte Feststoff, der immer noch einen Trockensubstanzgehalt von ca. 85% und somit einen Flüssigkeitsrestgehalt hat, zur Pelletierungsvorrichtung 30. Bei der zur Pelletierungsvorrichtung 30 handelt es sich um eine herkömmliche Pelletierungsmaschine, die über einen Pelletierer, einen Pelletkühler, einen Staubascheider sowie einen Pelletbunker verfügt. Es werden in diesein Verfahrensstadium hochenergetische Brennstoffpelletserhalten erzeugt, d.h. Pellets mit einem Energiegehalt von mindestens 5.100 kWh/t erzeugt und zwar als Folge der Kerntrocknung des Fasermaterials, d.h. auch das Zellwasser wurde verdampft.

## Patentansprüche

1. Verfahren für die Behandlung eines Produktes aus Gülle, Mist, Gärresten, bei dem das Produkt in eine Trennvorrichtung (20) eines Flüssigkeits-Feststoff-Separators (10) eingeführt und der in dem Produkt in Form von Fasermaterial enthaltene Feststoff entwässert aus dem Flüssigkeits-Feststoff-Separator (10) geführt wird, wobei während der Entwässerung in der Trennvorrichtung (20) des Flüssigkeits-Feststoff-Separators (10) auch Feststoff in Form von Partikeln und Mineralien von dem zu entwässernden Feststoff separiert wird und wobei der entwässerte Feststoff einer Trocknungseinrichtung (28) zugeführt wird, wobei der der Separation Mineralien von dem Fasermaterial separiert werden, und mehr als 85% der Mineralien von dem Fasermaterial separiert werden, **dadurch gekennzeichnet, dass** in der Trocknungseinrichtung (28) Temperaturen zwischen 200 ° C und 300 ° C erzeugt werden.

2. Verfahren nach Anspruch 1, **dadurch gekennzeichnet, dass** mehr als 90% der Mineralien von dem Fasermaterial separiert werden.

3. Verfahren nach Anspruch 1 oder 2 , **dadurch gekennzeichnet, dass** die aus der Separation resultierende flüssige Phase einer weiteren Separation zugeführt wird, bei der Feinpartikel aus der flüssigen Phase abgetrennt werden.

4. Verfahren nach einem der vorhergehenden Ansprüche, **dadurch gekennzeichnet, dass** der getrocknete Feststoff einer Pelletierunoseinrichtung (30) zugeführt wird.

5. Verfahren nach Anspruch 4, **dadurch gekennzeichnet, dass** in der Pelletierungsvorrichtung (30) Brennstoffpellets erzeugt werden.

## Claims

1. A method for the treatment of a product of slurry, manure, fermentation residues, in which the product is introduced into a separating device (20) of a liquid-solids separator (10) and the solid contained in the product in the form of fibrous material is dewatered and fed out of the liquid-solids separator (10), wherein, during the dewatering in the separating device (20) of the liquid-solid separator (10), solid matter in the form of particles and minerals is also separated from the solid matter to be dewatered and wherein the dewatered solid matter is fed to a drying device (28), wherein minerals are separated from the fibrous material during the separation and more than 85% of the minerals are separated from the fibrous material, **characterised in that** temperatures between 200°C and 300°C are generated in the drying device (28).

2. The method according to claim 1, **characterised in that** more than 90% of the minerals are separated from the fibre material.

3. The method according to claim 1 or 2, **characterised in that** the liquid phase resulting from the separation is fed to a further separation in which fine particles are separated from the liquid phase.

4. The method according to one of the preceding claims, **characterised in that** the dried solid material is fed to a pelletising device (30).

5. The method according to claim 4, **characterised in that** fuel pellets are produced in the pelletising device (30).

## Revendications

1. Procédé pour le traitement d'un produit constitué de lisier, de fumier, de résidus de fermentation, dans lequel le produit est introduit dans un dispositif de séparation (20) d'un séparateur liquide-solide (10) et la matière solide contenue dans le produit sous forme de matière fibreuse est guidée hors du séparateur liquide-solide (10) après avoir été déshydratée, dans lequel, pendant la déshydratation dans le dispositif de séparation (20) du séparateur liquide-solide (10), de la matière solide sous forme de particules et de minéraux est également séparée de la matière solide à déshydrater, et dans lequel la matière solide déshydratée est amenée à un dispositif de séchage (28), dans lequel, pendant la séparation, des minéraux sont séparés de la matière fibreuse, et plus de 85 % des minéraux sont séparés de la matière fibreuse, **caractérisé en ce que** des températures comprises entre 200°C et 300°C sont générées dans le dispositif de séchage (28),

2. Procédé selon la revendication 1, **caractérisé en ce que** plus de 90% des minéraux sont séparés de la matière fibreuse.

3. Procédé selon la revendication 1 ou 2, **caractérisé en ce que** la phase liquide résultant de la séparation est envoyée vers une autre séparation, au cours de laquelle des particules fines sont séparées de la phase liquide.

4. Procédé selon l'une des revendications précédentes, **caractérisé en ce que la** matière solide séchée est amenée à un dispositif de granulation (30).

5. Procédé selon la revendication 4, **caractérisé en ce que** des granulés de combustible sont produits dans le dispositif de granulation (30).
